# EUROPÄISCHE PATENTSCHRIFT

(11) **EP 0 889 305 B1**
(45) Veröffentlichungstag und Bekanntmachung des Hinweises auf die Patenterteilung: **03.10.2007**
(21) Anmeldenummer: 98106890.1
(22) Anmeldetag: 16.04.1998
(51) Int. Cl.: G01F 23/14, G01B 13/24, G01F 17/00

(54) **Verfahren und Vorrichtung zur Prüfung von Druckgasflaschen**
Method and device for testing pressurized gas bottles
Procédé et dispositif pour tester des bouteilles de gaz comprimé

(30) Priorität: 01.07.1997 DE 29711478 U; 07.11.1997 DE 19749208
(43) Veröffentlichungstag der Anmeldung: 07.01.1999
(73) Patentinhaber: Fischer Gase GmbH, 74927 Eschelbronn (DE)
(72) Erfinder: Fischer, Heinrich, 74927 Eschelbronn (DE)
(74) Vertreter: Blumenröhr, Dietrich

(56) Entgegenhaltungen:
- EP-A- 0 214 801
- US-A- 4 345 458
- US-A- 5 194 747
- US-A- 5 247 833

## Beschreibung

Die Erfindung betrifft ein Prüfverfahren mit den Merkmalen des Oberbegriffes des Anspruches 8 und eine Prüfvorrichtung mit den Merkmalen des Oberbegriffes des Anspruches 1

Die hierbei kontrollierten Druckgasflaschen müssen in regelmäßigen Abständen wiederkehrenden Prüfungen unterzogen werden. Neben Dichtheits und Druckmessungen, die für alle Flaschenarten erforderlich sind, müssen Druckgasflaschen mit einem Kern aus Aluminium oder Kunststoff und einer Umflechtung mit Kohlefasern auch noch bezüglich ihres Ausdehnungsverhaltens kontrolliert werden, wobei neben der volumentrischen Ausdehnung unter Prüfdruck auch die nach der Prüfung unter Umständen auftretende bleibende Ausdehnung erfasst werden muss.

Diese Ausdehnungsmessung erfolgt üblicherweise durch eine Water-Jacket-Prüfung, bei der die Druckgasflasche in einen Flüssigkeitsbehälter gegeben wird und das Innere der Druckgasflasche unter einen Druck gesetzt wird, der dem Prüfdruck entspricht. Bei den bekannten Water-Jacket-Prüfvorrichtungen erfolgt die Messung der Ausdehnung der Druckgasflasche dadurch, dass der Anstieg der Füllhöhe des Flüssigkeitsbehälters über eine Bürette gemessen wird, wozu vor der Druckbeaufschlagung der Flüssigkeitsbehälter entlüftet und gegenüber der Umgebung abgedichtet und der Prüfraum unter Vakuum gesetzt werden muss.

Dies ist nicht nur aufwendig, sondern verlängert den gesamten Messvorgang erheblich; darüber hinaus ist eine Weiterverarbeitung des Messergebnisses nur indirekt möglich.

In der US 4,345,458 ist außerdem eine Prüfvorrichtung offenbart, die einen Wassertank zum Testen einer Druckgasflasche umfasst sowie einen Hilfswassertank, der in vertikaler Richtung oberhalb des Wassertanks angeordnet ist und mit diesem in Verbindung steht. Die Messung der Ausdehnung einer mit Druck beaufschlagten Druckgasflasche erfolgt dabei über eine Bürette, die einerseits mit dem Wassertank und andererseits mit der Umgebungsatmosphäre in Verbindung steht. Eine Evakuierung des Wassertanks ist dabei nicht notwendig.

Hiervon ausgehend liegt der vorliegenden Erfindung die Aufgabe zugrunde, ein Verfahren und eine Vorrichtung zur Water-Jacket-Prüfung zur Verfügung zu stellen, die einen vereinfachten Aufbau und ein entsprechend vereinfachtes Prüfverfahren ermöglicht.

Diese Aufgabe wird erfindungsgemäß bei einer Vorrichtung bzw. bei einem Verfahren mit den Merkmalen des Oberbegriffs des Anspruches 1 bzw. 8 durch die Merkmale des kennzeichnenden Teils des Anspruches 1 bzw. 8 gelöst.

Hierdurch kann auf die Füllhöhenmessung mittels einer Ausgleichsbürette verzichtet werden, welche ein von der Umgebung abgeschottetes, entlüftetes System erforderlich macht. Vielmehr gewährleistet die elektronische Messvorrichtung, dass trotz etwaiger unterschiedlicher Umgebungsbedingungen zuverlässige Messergebnisse erhalten werden, was insbesondere aufgrund der hierdurch möglichen sehr schnellen Prüfabläufe und auch über einen Referenzdruckaufnehmer erreicht wird, der den Fülldruck gegenüber dem Umgebungsdruck abgleicht. Ein nach oben offener Flüssigkeitsbehälter muss zudem nicht in aufwendiger Art und Weise abgedichtet und entlüftet werden.

Hierdurch ergibt sich als weiterer Vorteil, dass die Druckgasflasche vor und während des Messvorganges beobachtet werden kann, wobei z. B. festgestellt werden kann, ob Luftblasen bei Druckbeaufschlagung der Druckgasflasche aus der Umwicklung entweichen, die bei den herkömmlichen Prüfverfahren mit evakuiertem Behälter die Ausdehnungsmessung beeinträchtigen würden, im übrigen aber auch eine Auskunft über den Zustand der Druckgasflasche gibt. Bei einem abgeschlossenen und abgedichteten System ist dies nur unter großem Aufwand möglich.

Bevorzugterweise besteht die elektronische Messvorrichtung aus einem Druckaufnehmer, der den bei der Prüfung auftretenden höheren Flüssigkeitsdruck infolge der Anhebung des Flüssigkeitsspiegels registriert. Dieser Druckaufnehmer soll - wie vorstehend erwähnt - mit einem Referenzdruckaufnehmer verbunden sein, um den resultierenden, der Ausdehnung der Druckgasflasche entsprechenden Druck ermitteln zu können und um den jeweiligen Luftdruck der Umgebung kompensieren zu können.

Die Meßvorrichtung kann aber auch die Füllhöhe mit beliebigen Meßmethoden - beispielsweise mit Ultraschall, Laserstrahl, mit Hilfe eines Schwimmers, kapazitiv, potentiometisch oder induktiv - ermitteln.

Außerdem ist der Druckaufnehmer bzw. die elektronische Meßvorrichtung zweckmäßigerweise mit einer elektronischen Auswerteeinheit verbunden, die darüberhinaus die Datenübernahme an weitere Auswertesysteme ermöglicht.

Bevorzugterweise ist der Flüssigkeitsbehälter mit Wasser gefüllt, wobei natürlich auch andere Flüssigkeiten zum Einsatz kommen können. Um die Druckgasflaschen während der Messung beobachten zu können und um deren Einsetzen zu vereinfachen, ist der Flüssigkeitsbehälter zweckmäßigerweise nach oben offen. Außerdem ist es vorteilhaft, wenn der Flüssigkeitsbehälter durchsichtig ausgeführt ist.

Wie bei der Water-Jacket-Prüfung üblich, sollte die Druckbeaufschlagung über eine an eine Hochdruckpumpe angeschlossene Flüssigkeitsleitung erfolgen, die mit dem Inneren der Druckgasflasche in Verbindung steht. Als Druckmedium wird zweckmäßigerweise ebenfalls Wasser verwendet, das aufgrund seiner Inkompressibilität gegenüber Luft oder gasförmigen Medien vorzuziehen ist. Denn zum einen bleibt ein Bersten der Druckgasflasche während der Prüfung bei Wasser aufgrund des raschen Druckausgleichs ohne Folgen, während eine Druckbeaufschlagung mit Luft zu einer Explosion führen würde. Zum anderen ist auch die Erzeugung der üblichen Prüfdrücke von ca. 450 bar mit Hilfe von Wasser mit gegenüber Luft stark vereinfachten Mitteln möglich.

Das erfindungsgemäße Verfahren zur Messung der Ausdehnung von druckbeaufschlagten Hohlkörpern, insbesondere von Druckgasflaschen ist dadurch gekennzeichnet, dass der Flüssigkeitsbehälter nach oben offen ist und die Prüfvorrichtung eine elektronische Messvorrichtung zur Erfassung der Füllhöhe aufweist. Der Hohlkörper ist während der Messung von einer Flüssigkeit umgeben und vorzugsweise vollständig in diese eingetaucht. Weiterhin ist die Flüssigkeit während der Messung der Umgebungsatmosphäre ausgesetzt, und die Ausdehnung des Hohlkörpers wird durch Erfassung der von der Druckbeaufschlagung des Hohlkörpers abhängigen Füllhöhe der Flüssigkeit gemessen. Das heißt, das übliche Evakuieren der Prüfumgebung kann durch das erfindungsgemäße Prüfverfahren vermieden werden, wodurch die Ausdehnungsmessung drastisch beschleunigt werden kann. Hierzu werden in erfindungsgemäßer Art und Weise elektronische Messverfahren verwendet, die das rasche Erfassen der Füllhöhe begünstigen, wodurch man erst unabhängig von den das Messergebnis bei längeren Meßzeiträumen beeinflussenden Umgebungseinflüssen wird.

Was die elektronische Messung betrifft, so kann diese neben der Erfassung des Flüssigkeitsdruckes auch dadurch erfolgen, dass mittels Ultraschall, Laserstrahl, mit Hilfe eines Schwimmers, kapazitiv, potentiometrisch und/oder induktiv gemessen wird. Es muss hierbei lediglich sichergestellt werden, dass eine schnelle Erfassung der Füllhöhe und insbesondere eine Gegenüberstellung zwischen Ausgangsfüllhöhe vor bzw. zu Beginn der Messung und Endfüllhöhe bei Erreichen des Prüfdruckes möglich ist.

Will man die trotz des sehr kurzen Prüfzeitraumes auftretenden Verfälschungsmöglichkeiten aufgrund von Umgebungseinflüssen gänzlich ausschließen, so empfiehlt es sich, gleichzeitig mit der Messung des Flüssigkeitsdruckes den Referenzdruck zu messen und beide Drücke gegeneinander abzugleichen.

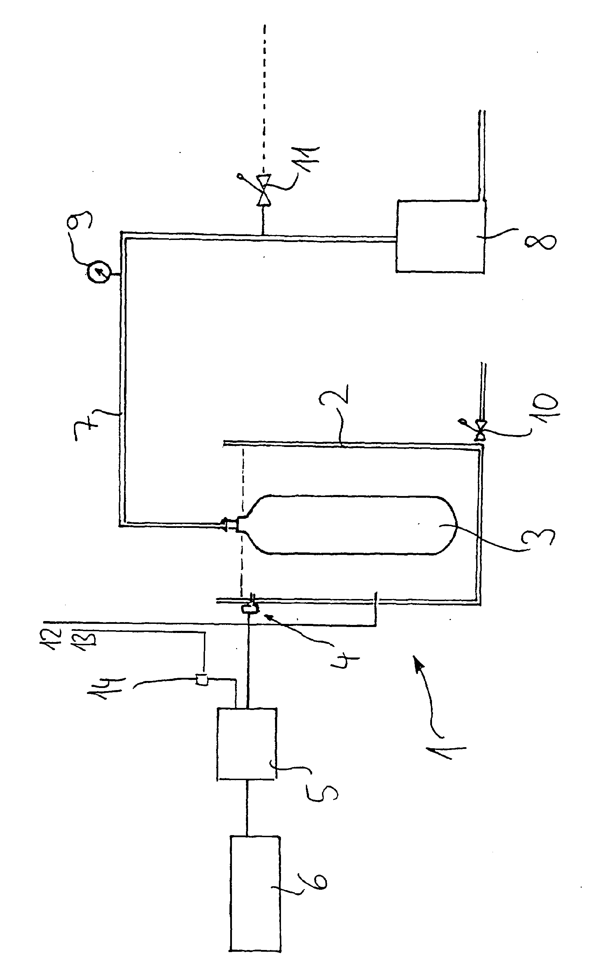

Weitere Merkmale und Vorteile der vorliegenden Erfindung ergeben sich aus der nachfolgenden Beschreibung eines Ausführungsbeispiels, das schematisch in der Zeichnung dargestellt ist.

Hier ist eine Meßvorrichtung 1 gezeigt, die aus einem Flüssigkeitsbehälter 2 besteht, in dem eine Druckgasflasche 3 aufbewahrt ist. Der Flüssigkeitsbehälter ist bis ungefähr zur Höhe der Oberkante der Druckgasflasche mit Wasser gefüllt und weist einen Meßwertaufnehmer 4 auf. Dieser Meßwertaufnehmer mißt den jeweiligen füllhöhenabhängigen Druck des Wassers und ermöglicht unter Berücksichtigung des Umgebungsdrucks die Messung der Füllhöhe und somit eine Angabe über den Grad der Ausdehnung der Druckgasflasche.

Der vom Meßwertaufnehmer erfaßte Druck wird hierbei an einen Prozessor 5 weitergegeben, der einen Abgleich mit den Umgebungsbedingungen durchführt, indem er von einem Druckmesser 14 den Umgebungsdruck erhält, wobei der Druckmesser außerhalb des Flüssigkeitsbehälters angeordnet ist und vorzugsweise die gleiche Temperaturumgebung wie der Meßwertaufnehmer 4 aufweisen sollte. Dies wird über Temperaturfühler 12 und 13 kontrolliert. Das insgesamt erhaltene Vergleichs-Meßergebnis in Form der volumetrischen Ausdehnung wird an eine Ausgabeeinheit 6 weitergegeben.

Das Innere der Druckgasflasche 3 ist über eine Leitung 7 mit einer Hochdruckpumpe 8 verbunden, die im hier vorliegenden Fall Wasser in die Druckgasflasche pumpt, wobei der jeweilige Leitungsdruck über ein Prüfdruckmanometer 9 abgelesen werden kann.

Schließlich ist im Bodenbereich des Flüssigkeitsbehälters 2 ein Ablaßhahn 10 angeordnet, der neben der Entleerung des Flüssigkeitsbehälters insbesondere dazu dient, bei unterschiedlicher Flaschengröße jeweils die Füllhöhe der Flüssigkeit an den Meßbereich des Meßwertaufnehmers 4 anzupassen. Auch die Flüssigkeitsleitung 7 ist mit einem Entlastungsventil 11 versehen.

Anstatt des am Referenzdruckmesser 14 angeordneten Temperaturfühlers 13 kann auch in vereinfachter Art und Weise der Druckmesser von einer Wärmeisolierung umgeben sein, die ihn gegenüber Umgebungseinflüssen abschottet. Neben einer ungefähr gleichen Temperatur der Umgebung von Meßwertaufnehmer und Referenzdruckmesser ist es auch wichtig, daß die Druckgasflasche und die Behälterflüssigkeit die gleiche Temperatur aufweisen. Zwar ermöglicht die vorliegende Erfindung aufgrund ihres kurzen Meßzeitraumes ein von Temperaturschwankungen bzw. -änderungen weitgehend unbeeinträchtigtes Momentanmeßergebnis; jedoch wird auch hier die Messung verbessert, wenn stabile Temperatur- und somit auch Druckbedingungen vorliegen.

Eine weitere Vereinfachung ergibt sich dann, wenn der Meßwertaufnehmer mit einem an den Referenzdruckmesser angeschlossenen Referenzport versehen ist und den Abgleich bei verändertem Luftdruck selbst durchführt, dem Prozessor also gleich ein um Umgebungseinflüsse bereinigtes Ergebnis zur Verfügung stellt.

Das Vorgehen beim Überprüfen einer Druckgasflasche erfolgt nun dadurch, daß die Flasche zunächst mit Wasserdruck auf den normalen Betriebsdruck in Höhe von beispielsweise 3×10⁷ Pa (300 bar) gebracht wird, wobei zum einen die Dichtigkeit des Systems geprüft wird und zum anderen festgestellt wird, ob aus der Umhüllung der Flasche Luftbläschen austreten, welche die spätere Messung beeinträchtigen könnten. Anschließend wird bei positivem Ergebnis der Druck wieder entlastet und der Meßwertaufnehmer 4 auf 0 zurückgesetzt.

Nun wird die Flasche auf den Prüfdruck von beispielsweise 4.5×10⁷ Pa (450 bar) gepumpt und die hierbei erzeugte Flaschenausdehnung über den Meßwertaufnehmer 4 erfaßt. Dieser gibt den jeweiligen Druck an den Prozessor 5 weiter, der aus den vorgenannten Größen die volumetrische Ausdehnung der Flasche errechnet.

Wird nun die Flasche wieder entlastet, so kann durch erneutes Ablesen des Ausdehnungsergebnisses festgestellt werden, ob der Prüfdruck zu einer dauerhaften Ausdehnung der Flasche geführt hat. Diese darf maximal einem Wert von 5 % des Grades der Ausdehnung der Druckprüfung betragen.

Auf zwei praktische Beispiele bezogen heißt das: Bei einer kleinen Flasche mit 2 l Volumen ergibt sich eine Ausdehnung während der Prüfung von 18 ml; 5 % hiervon sind 0,9 ml, weshalb die Füllhöhenänderung auf 0,1 ml-Schritte eingestellt sein muß. Bei einer Flasche mit 6,8 1 Volumen liegt die Ausdehnung während der Prüfung bei etwa 80 ml; 5 % hiervon ergeben 4 ml, so daß die Füllhöhenänderung nur in 1 ml-Schritten erfaßt werden muß.

Zusammenfassend liegt der Vorteil der vorliegenden Erfindung darin, daß eine schnelle Water-Jacket-Prüfung ermöglicht wird, da kein geschlossener Behälter geflutet und von Restluft entlüftet werden muß; außerdem ist eine Beobachtung der Flasche während des Prüfvorgangs möglich.

## Patentansprüche

1. Prüfvorrichtung zur Messung der Ausdehnung einer druckbeaufschlagten Druckgasflasche, enthaltend einen die Druckgasflasche aufnehmenden, mit einer Flüssigkeit zumindest teilweise gefüllten Flüssigkeitsbehälter, wobei die Flüssigkeit im Flüssigkeitsbehälter (2) mit der Umgebungsatmosphäre in Verbindung steht, sowie Mittel zur Druckbeaufschlagung der Druckgasflasche,
**dadurch gekennzeichnet,**
**daß** die Prüfvorrichtung eine elektronische Messvorrichtung zur Erfassung der Füllhöhe aufweist und daß der Flüssigkeitsbehälter (2) nach oben offen ist.

2. Prüfvorrichtung gemäß Anspruch 1,
**dadurch gekennzeichnet,**
**daß** die Messvorrichtung aus einem Druckaufnehmer (4) besteht.

3. Prüfvorrichtung gemäß Anspruch 2,
**dadurch gekennzeichnet,**
**daß** zusätzlich zum Druckaufnehmer ein Referenzdruckmesser (14) vorgesehen ist.

4. Prüfvorrichtung gemäß Anspruch 2,
**dadurch gekennzeichnet,**
**daß** der Druckaufnehmer (4) mit einer elektronischen Auswerteeinheit (5) verbunden ist.

5. Prüfvorrichtung gemäß zumindest einem der vorstehenden Ansprüche,
**dadurch gekennzeichnet,**
**daß** der Flüssigkeitsbehälter (2) mit Wasser gefüllt ist.

6. Prüfvorrichtung gemäß zumindest einem der vorstehenden Ansprüche,
**dadurch gekennzeichnet,**
**daß** der Flüssigkeitsbehälter (2) durchsichtig ist.

7. Prüfvorrichtung gemäß zumindest einem der vorstehenden Ansprüche,
**dadurch gekennzeichnet,**
**daß** die Druckbeaufschlagung über eine an eine Hochdruckpumpe (8) angeschlossene Flüssigkeitsleitung (7) erfolgt, die mit dem Inneren der Druckgasflasche (3) in Verbindung steht.

8. Verfahren zur Messung der Ausdehnung von druckbeaufschlagten Hohlkörpern, insbesondere von Druckgasflaschen, wobei der Hohlkörper während der Messung von einer Flüssigkeit umgeben ist und die Flüssigkeit während der Messung der Umgebungsatmosphäre ausgesetzt ist,
**dadurch gekennzeichnet,**
**daß** die Ausdehnung des Hohlkörpers durch Erfassung der von der Druckbeaufschlagung des Hohlkörpers beeinflussten Füllhöhe der Flüssigkeit in einem nach oben offenen Flüssigkeitsbehälter elektronisch gemessen wird.

9. Verfahren nach Anspruch 8,
**dadurch gekennzeichnet,**
**daß** die Füllhöhe mittels Ultraschall und/oder Laserstrahl gemessen wird.

10. Verfahren nach zumindest einem der vorstehenden Ansprüche 8 bis 9,
**dadurch gekennzeichnet,**
**daß** die Füllhöhe durch Erfassung des Flüssigkeitsdrucks gemessen wird.

11. Verfahren nach zumindest einem der vorstehenden Ansprüche 8 bis 9,
**dadurch gekennzeichnet,**
**daß** die Füllhöhe mit Hilfe eines Schwimmers, kapazitiv, potentiometrisch und/oder induktiv gemessen wird.

12. Verfahren nach Anspruch 10,
**dadurch gekennzeichnet,**
**daß** gleichzeitig mit der Messung des Flüssigkeitsdruckes der Referenzdruck gemessen wird.

13. Verfahren nach Anspruch 12,
**dadurch gekennzeichnet,**
**daß** Flüssigkeitsdruck und Referenzdruck gegeneinander abgeglichen werden.

14. Verfahren nach zumindest einem der Ansprüche 8 bis 13,
**dadurch gekennzeichnet,**
**daß** die Flüssigkeit Wasser ist.

15. Verfahren nach zumindest einem der Ansprüche 8 bis 14,
**dadurch gekennzeichnet,**
**daß** zur Druckbeaufschlagung des Hohlkörpers Wasser verwendet wird, und daß der Druck des im Hohlkörper befindlichen Wassers über eine Hochdruckpumpe gesteuert wird.

## Claims

1. Testing device for measuring the expansion of a pressurised compressed-gas bottle, containing a liquid tank which receives the compressed-gas bottle and is at least partially filled with a liquid, wherein the liquid in the liquid tank (2) is in communication with the surrounding atmosphere, and also containing means for pressurising the compressed-gas bottle, **characterised in that** the testing device has an electronic measuring device for detecting the filling level and that the liquid tank (2) is open towards the top.

2. Testing device as claimed in Claim 1, **characterised in that** the measuring device comprises a pressure sensor (4).

3. Testing device as claimed in Claim 2, **characterised in that** a reference pressure gauge (14) is provided in addition to the pressure sensor.

4. Testing device as claimed in Claim 2, **characterised in that** the pressure sensor (4) is connected to an electronic evaluation unit (5).

5. Testing device as claimed in at least one of the preceding claims, **characterised in that** the liquid tank (2) is filled with water.

6. Testing device as claimed in at least one of the preceding claims, **characterised in that** the liquid tank (2) is transparent.

7. Testing device as claimed in at least one of the preceding claims, **characterised in that** the pressurisation takes place via a liquid pipe (7) which is connected to a high-pressure pump (8) and communicates with the interior of the compressed-gas bottle (3).

8. Method of measuring the expansion of pressurised hollow bodies, in particular compressed-gas bottles, wherein the hollow body is surrounded by a liquid during the measurement and the liquid is exposed to the surrounding atmosphere during the measurement, **characterised in that** in a liquid tank which is open towards the top the expansion of the hollow body is measured electronically by detection of the liquid filling level which is influenced by the pressurisation of the hollow body.

9. Method as claimed in Claim 8, **characterised in that** the filling level is measured by means of ultrasound and/or laser beam.

10. Method as claimed in at least one of the preceding Claims 8 to 9, **characterised in that** the filling level is measured by detection of the liquid pressure.

11. Method as claimed in at least one of the preceding Claims 8 to 9, **characterised in that** the filling level is measured with the aid of a float, capacitively, potentiometrically and/or inductively.

12. Method as claimed in Claim 10, **characterised in that** the reference pressure is measured simultaneously with the measurement of the liquid pressure.

13. Method as claimed in Claim 12, **characterised in that** the liquid pressure and the reference pressure are equalised with one another.

14. Method as claimed in at least one of Claims 8 to 13, **characterised in that** the liquid is water.

15. Method as claimed in at least one of Claims 8 to 14, **characterised in that** water is used for pressurisation of the hollow body, and that the pressure of the water located in the hollow body is controlled via a high-pressure pump.

## Revendications

1. Dispositif de contrôle permettant de mesurer la dilatation d'une bouteille de gaz comprimé soumise à la pression contenant un conteneur de fluide recevant la bouteille de gaz comprimé, rempli au moins partiellement par un fluide, dans lequel le fluide dans le conteneur de fluide (2) est en relation avec l'atmosphère ambiante, ainsi qu'un moyen de mise sous pression de la bouteille de gaz comprimé,
**caractérisé en ce**
**que** le dispositif de contrôle présente un dispositif de mesure électronique permettant d'enregistrer le niveau de remplissage et que le conteneur de fluide (2) est ouvert vers le haut.

2. Dispositif de contrôle selon la revendication 1,
**caractérisé en ce**
**que** le dispositif de mesure se compose d'un capteur de pression (4).

3. Dispositif de contrôle selon la revendication 2,
**caractérisé en ce**
**qu'**un capteur de pression de référence (14) est prévu en plus du capteur de pression.

4. Dispositif de contrôle selon la revendication 2,
**caractérisé en ce**
**que** le capteur de pression (4) est relié à une unité d'évaluation électronique (5).

5. Dispositif de contrôle selon au moins l'une quelconque des revendications précédentes,
**caractérisé en ce**
**que** le conteneur de fluide (2) est rempli d'eau.

6. Dispositif de contrôle selon au moins l'une quelconque des revendications précédentes,
**caractérisé en ce**
**que** le conteneur de fluide (2) est transparent.

7. Dispositif de contrôle selon au moins l'une quelconque des revendications précédentes,
**caractérisé en ce**
**que** la mise sous pression s'effectue par le biais d'une conduite de fluide (7) reliée à une pompe haute pression (8), qui est en relation avec l'intérieur de la bouteille de gaz comprimé (3).

8. Procédé de mesure de la dilatation de corps creux soumis à la pression, en particulier de bouteilles de gaz comprimé, dans lequel le corps creux est entouré d'un fluide pendant la mesure et le fluide est exposé à l'atmosphère ambiante pendant la mesure,
**caractérisé en ce**
**que** la dilatation du corps creux est mesurée électroniquement par l'enregistrement du niveau de remplissage du fluide influencé par la mise sous pression du corps creux dans un conteneur de fluide ouvert vers le haut.

9. Procédé selon la revendication 8,
**caractérisé en ce**
**que** le niveau de remplissage est mesuré au moyen d'ultrasons et/ou d'un rayon laser.

10. Procédé selon au moins l'une quelconque des revendications précédentes 8 à 9,
**caractérisé en ce**
**que** le niveau de remplissage est mesuré par enregistrement de la pression du fluide.

11. Procédé selon au moins l'une quelconque des revendications précédentes 8 à 9,
**caractérisé en ce**
**que** le niveau de remplissage est mesuré à l'aide d'un flotteur de façon capacitive, potentiométrique et/ou inductive.

12. Procédé selon la revendication 10,
**caractérisé en ce**
**que** la pression de référence est mesurée en même temps que la mesure de la pression du fluide.

13. Procédé selon la revendication 12,
**caractérisé en ce**
**que** la pression du fluide et la pression de référence sont comparées l'une à l'autre.

14. Procédé selon au moins l'une quelconque des revendications 8 à 13,
**caractérisé en ce**
**que** le fluide est de l'eau.

15. Procédé selon au moins l'une quelconque des revendications 8 à 14,
**caractérisé en ce**
**que** de l'eau est utilisée pour la mise sous pression du corps creux et que la pression de l'eau se trouvant dans le corps creux est commandée par une pompe haute pression.
